# EUROPEAN PATENT SPECIFICATION

(11) **EP 0 947 488 B1**
(45) Date of publication and mention of the grant of the patent: **17.09.2003**
(21) Application number: 99201012.4
(22) Date of filing: 01.04.1999
(51) Int. Cl.: C04B 37/02

(54) **Method for joining ferrites to metallic bodies**
Verfahren zum Verbinden von Ferriten mit metallischen Körpern
Procédé pour lier des ferrites avec corps métalliques

(30) Priority: 03.04.1998 IT MI980728
(43) Date of publication of application: 06.10.1999
(73) Proprietor: ABB Kent Taylor S.p.a., 22016 Lenno (CO) (IT)
(72) Inventor: Moroni, Andrea, 21055 Gorla Minore (VA) (IT); Borelli, Riccardo, 22016 Lenno (CO) (IT); Zardoni, Fabrizio, 21014 Laveno Mombello (VA) (IT)
(74) Representative: Giavarini, Francesco

(56) References cited:
- US-A- 3 518 066
- US-A- 3 793 705
- US-A- 3 940 051

## Description

The present invention relates to a polymer-free method for joining elements made of ferrite to metallic supports, and to a device in which the junction of metallic components and ferrite components is provided by means of said method.

It is known that a common method used for joining a metallic surface and a non-metallic material, such as for example a ferrite, entails interposing a polymeric material, typically an epoxy resin, between these two components. The use of junctions which employ polymeric materials, however, is highly critical, especially in the case of devices such as for example actuators, pressure sensors, etc., due to the considerable difference, in terms of mechanical strength and thermal expansion coefficient, between the resin, the metallic component and the non-metallic component. In these cases, due to the conditions in which the device operates, the junction is in fact subjected to mechanical and thermal stresses. Such stresses can cause geometric/volumetric modifications thereof which cannot be recovered due to thermal hysteresis phenomena; these modifications causes malfunctions in the devices or even the failure of the junction.

Attempts have been made to overcome these drawbacks by providing junctions between metallic parts and non-metallic elements, for example ferrite elements, without using polymeric materials, interposing layers of metallic material instead. Although this solution is advantageous with respect to the previously mentioned one, in the current state of the art it has some drawbacks. In particular, a considerable problem is the fact that the adhesion of layers of metal to the surface of the ferrite is very difficult and has poor resistance to mechanical stresses. Moreover, the soldering treatment for joining the metal parts to the metal layers and to the ferrite entails temperature levels which cause the loss of the magnetic characteristics of the ferrite. In order to obviate this drawback it is necessary to introduce in the junction one or more layers of metallic material which act as intermediate media and allow to use lower soldering temperatures. An example in this regard is provided by the US patent N° 4,643,347. This solution, however, entails an additional use of metallic material which negatively affects manufacturing costs and times. This drawback appears quite relevant if we consider that crucial characteristics of these kind of methods should be repeatability and suitability for full automation.

Moreover, the solution described in the above mentioned patent is applicable only to some kinds of magnetic element, such as those based on aluminium, nickel and cobalt (AlNiCo).

Examples of known method of the type having the features of the preamble of Claim 1 can be found in patents US 3,940,051, US 3,518,066 US 3,793,705.

The aim of the present invention is to provide a method for joining elements made of ferrite and metallic bodies in which the junction between these elements is provided without interposing polymeric materials.

Within the scope of this aim, an object of the present invention is to provide a method for joining elements made of ferrite and metallic bodies which is adapted for full automation, so as to reduce production costs and times.

Another object of the present invention is to provide a method for joining elements made of ferrite and metallic bodies which has repeatability characteristics.

Another object of the present invention is to provide a method for joining elements made of ferrite and metallic bodies in which the magnetic properties of the ferrite remain unchanged.

Another object of the present invention is to provide a method for joining elements made of ferrite and metallic bodies in which the junction is capable of withstanding mechanical and thermal stresses without altering its physical characteristics.

Another object of the present invention is to provide a method for joining elements made of ferrite and metallic bodies which is highly reliable, relatively easy to perform and at competitive costs.

This aim, these objects and others that will become apparent hereinafter are achieved by a method for joining a ferrite to a metallic body comprising the steps of:
a) metallizing the ferrite by depositing at least one layer of metal on at least one part of a surface thereof;
b) soldering the metallized ferrite to the metallic body; characterized in that, beforehand said phase b) of soldering, it comprises the following steps:
a.1) depositing on said metallic body a first layer of nickel and a second layer of silver; and
a.2) depositing a layer of solderable material on said layer of silver.Further characteristics and advantages of the present invention will become apparent from the following detailed description of preferred but not exclusive embodiments of the method according to the invention, illustrated only by way of non-limitative example in the accompanying drawings, wherein:
   - Figure 1 is a schematic view of the step for the metallization of an element made of ferrite in an embodiment of the method according to the invention;
   - Figure 2 is a schematic view of the step for the metallization of an element made of ferrite in an alternative embodiment of the method according to the invention;
   - Figure 3 is a schematic view of the step for depositing a layer of solderable material onto a metallic body in an embodiment of the method according to the invention;
   - Figure 4 is a schematic view of the step for soldering an element made of ferrite to a metallic body in an embodiment of the method according to the invention.

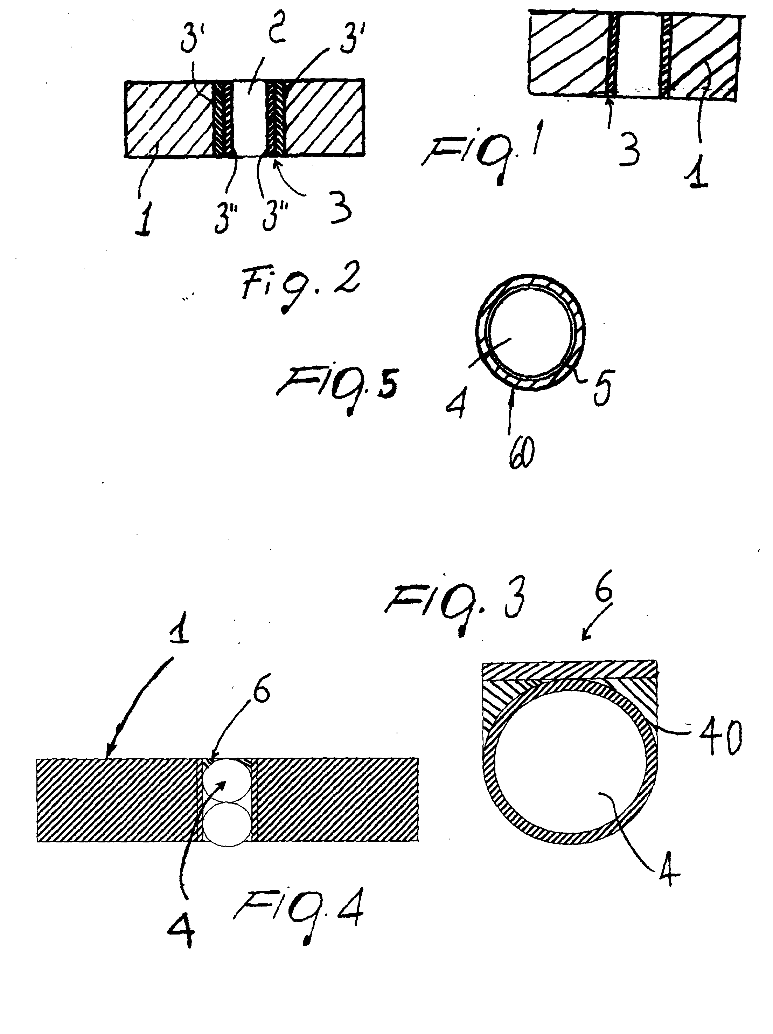

With reference to the above figures, the method according to the invention comprises a first step for metallizing a ferrite element 1. By virtue of this metallization, at least one part of the surface of the ferrite element is covered with at least one layer of metal 3. In one embodiment of the method according to the invention, said layer of metal is preferably constituted by a single layer of silver or copper. As an alternative said layer of metal 3 comprises two different layers of metallic material: the first layer 3' adheres to said ferrite and the second layer 3" adheres to the first layer. In particular, as shown in Figure 1, metallization has been provided on the walls of a hole 2 formed in a ferrite element 1. In a preferred embodiment of the method according to the invention, the metal deposition is performed by subjecting the ferrite part to electrolytic multilayer metallization, using, for example, chemical palladium, chemical copper and electrolytic copper.

As an alternative, other techniques of the same kind, such as evaporation in high vacuum, sputtering, electron-gun deposition or plasma-assisted deposition, might be used. By means of this metallization, the first layer of metallic material 3' is deposited on the walls of the hole 2; in the illustrated embodiment, said layer is constituted by chemical palladium. Advantageously, the palladium, by means of its chemical-physical characteristics, adheres directly to the ferrite, bonding strongly with it and thus facilitating a substantial improvement of the process for metallizing the ferrite surface and of the mechanical strength of the junction. Metallization is then completed by depositing on the layer of palladium a second layer 3" of metallic material which is advantageously constituted by copper. The choice of copper, by means of its excellent solderability characteristics, facilitates the junction between the ferrite and the metallic body.

It should be observed that the above described metallization method is performed at a temperature which is normally below the Curie point of ferrite. This limit is set by physical constraints which cause ferrite to degrade their magnetic characteristics at higher temperatures. Moreover, in case of particular shapes, for example an hole, or in case of particular application requirements, for example the production of devices such as inductive sensors, position sensors, etc., metal selective etching can be used. In fact, it is possible to resort to the selective etching of the regions of the ferrite that must not be coated with metal, using for example iron cloride. This fact avoids having regions of the ferrite element coated with metal which might modify the magnetic circuit of the device and compromise its useful signal.

The method according to the invention then comprises a step for soldering the metallic body to the ferrite; in the illustrated embodiment, the metallic body is constituted by a ball 4 made of a steel such as AISI 420. In order to achieve this soldering, an element of solderable material 6, preferably disc-shaped, is laid beforehand on the surface of the metallic body, as shown in Figure 3. Said disc-shaped element 6 is preferably constituted by an alloy based on tin and bismuth. Alternatively it can be used a dust alloy, having a antioxidant already mixed, based on indium (80%), lead (15%) and silver (5%).

In a preferred embodiment of the method according to the invention, soldering is achieved by hot air brazing, which allows to melt the alloy 7 of solderable material so that it adheres to the metallization of the ferrite part, as shown in Figure 4.

As an alternative, induction or furnace or laser brazing could be used.

Advantageously, in order to facilitate the adhesion of the alloy to the ferrite it is convenient to use a fluxing antioxidant element (soldering alloy), indicated by reference 40 in figure 3.

In order to tender the body suitable for adhesion to the alloy of solderable material, it is subjected to a surface coating with metallic material in accordance with claim 1. As shown in Figure 5, the coating is obtained by depositing a first layer 5 of nickel directly on the surface of the ball; said layer is preferably 1 to 3 µm thick. A second layer of silver 60 is then deposited on said layer; said second layer preferably has a thickness between 5 and 15 µm; the layer of silver allows to improve the solderability characteristics of the metallic body with respect to the alloy. In particular, the coating of the ball is achieved by galvanization.

Suitable fixtures are used to correctly position the ferrite elements during brazing. Said fixtures keep the ferrite at the appropriate level by means of their magnetic properties and are suitably shaped to allow high temperature air to reach the disc-shaped element made brazing alloy.

In practice it has been observed that the method according to the invention allows to fully achieve the intended aim, since it allows to directly connect a ferrite to a metallic surface without interposing polymeric material. Moreover, the above described method is suitable for automation being characterized by high repeatability and no alteration of the magnetic properties of the ferrite.

## Claims

1. A method for joining a ferrite to a metallic body, comprising the steps of:
a) metallizing the ferrite by depositing at least one layer of metal on at least one part of a surface thereof;
b) soldering the metallized ferrite to the metallic body; **characterized in that**, beforehand said phase b) of soldering, it comprises the following steps:
a.1) depositing on said metallic body a first layer of nickel and a second layer of silver; and
a.2) depositing a layer of solderable material on said layer of silver.

2. The joining method according to claim 1, **characterized in that** said layer of metal is constituted by copper.

3. The joining method according to claim 1, **characterized in that** said layer of metal comprises at least two different layers of metallic material.

4. The joining method according to claim 3, **characterized in that** said two different layers comprise a first layer of palladium and a second layer of copper, the palladium layer adhering directly to the surface of the ferrite and the copper layer adhering to the palladium layer.

5. The joining method according to one or more of the preceding claims, **characterized in that** said step a) is performed by means of an electrolytic metallization.

6. The joining method according to one or more of claims 1 to 4, **characterized in that** said step a) is performed by means of a high vacuum evaporation, or a sputtering or plasma-assisted deposition or electron-gun deposition.

7. The joining method according to claim 1, **characterized in that** the nickel layer is 1 to 3 µm thick and the silver layer is 5 to 15 µm thick.

8. The joining method according to claim 1 or 7, **characterized in that** said layers of silver and nickel are deposited on the metallic body by galvanization.

9. The joining method according to one or more of the previous claims, **characterized in that** said phase b) is performed by brazing.

10. The joining method according to claim 9, **characterized in that** step b) is performed by hot air brazing.

11. The joining method according to claim 9, **characterized in that** step b) is performed by induction brazing.

12. The joining method according to claim 9, **characterized in that** step b) is performed by furnace brazing.

13. The joining method according to claim 9, **characterized in that** step b) is performed by laser brazing.

14. A mechanical device comprising at least one metallic body, a ferrite, and a layer of metal which adheres at least to one surface portion of the ferrite, **characterized in that** it comprises a layer of nickel deposited on at least one part of the surface of the metallic body, a layer of silver deposited on the layer of nickel and in contact with said layer of metal, a layer of solderable material deposited on the layer of silver.

## Patentansprüche

1. Verfahren zum Verbinden eines Ferrits mit einem Metallkörper, mit den Schritten:
a) Metallisieren des Ferrits durch Abscheiden wenigstens einer Schicht Metall auf wenigstens einem Teil einer Oberfläche davon;
b) Verlöten des metallisierten Ferrits mit dem Metallkörper,
**dadurch gekennzeichnet, dass** es vor der Phase b) des Lötens die folgenden Schritte aufweist:
a.1) Abscheiden einer ersten Schicht Nickel und einer zweiten Schicht Silber auf dem Metallkörper; und
a.2) Abscheiden einer Schicht lötbaren Materials auf der Schicht Silber.

2. Verbindungsverfahren nach Anspruch 1, **dadurch gekennzeichnet, dass** die Schicht Metall aus Kupfer besteht.

3. Verbindungsverfahren nach Anspruch 1, **dadurch gekennzeichnet, dass** die Schicht Metall wenigstens zwei unterschiedliche Schichten eines metallischen Materials aufweist.

4. Verbindungsverfahren nach Anspruch 3, **dadurch gekennzeichnet, dass** die zwei unterschiedlichen Schichten eine erste Schicht Palladium und eine zweite Schicht Kupfer aufweisen, wobei die Palladiumschicht direkt an der Oberfläche des Ferrits haftet und die Kupferschicht an der Palladiumschicht haftet.

5. Verbindungsverfahren nach einem oder mehreren der vorhergehenden Ansprüche, **dadurch gekennzeichnet, dass** Schritt a) mittels einer elektrolytischen Metallisierung durchgeführt wird.

6. Verbindungsverfahren nach einem oder mehreren der Ansprüche 1 bis 4, **dadurch gekennzeichnet, dass** Schritt a) mittels einer Hochvakumm-Bedampfung oder einer Sputter- oder plasmaunterstützten Abscheidung oder einer Elektronenkanonenabscheidung durchgeführt wird.

7. Verbindungsverfahren nach Anspruch 1, **dadurch gekennzeichnet, dass** die Nickelschicht 1 bis 3 µm dick ist und die Silberschicht 5 bis 15 µm dick ist.

8. Verbindungsverfahren nach Anspruch 1 oder 7, **dadurch gekennzeichnet, dass** die Schichten Silber und Nickel auf dem Metallkörper durch Verzinken abgeschieden werden.

9. Verbindungsverfahren nach einem oder mehreren der vorherigen Ansprüche, **dadurch gekennzeichnet, dass** die Phase b) durch Löten durchgeführt wird.

10. Verbindungsverfahren nach Anspruch 9, **dadurch gekennzeichnet, dass** Schritt b) durch Heißluftlöten durchgeführt wird.

11. Verbindungsverfahren nach Anspruch 9, **dadurch gekennzeichnet, dass** Schritt b) durch Induktionslöten durchgeführt wird.

12. Verbindungsverfahren nach Anspruch 9, **dadurch gekennzeichnet, dass** Schritt b) durch Ofenlöten durchgeführt wird.

13. Verbindungsverfahren nach Anspruch 9, **dadurch gekennzeichnet, dass** Schritt b) durch Laserlöten durchgeführt wird.

14. Mechanische Vorrichtung mit wenigstens einem Metallkörper, einem Ferrit und einer Schicht Metall, die wenigstens auf einem Oberflächenteil des Ferrits haftet, **dadurch gekennzeichnet, dass** sie eine Schicht Nickel, die auf wenigstens einem Teil der Oberfläche des Metallkörpers abgeschieden ist, eine Schicht Silber, die auf der Schicht Nickel abgeschieden ist und in Kontakt mit der Schicht Metall ist, eine Schicht lötbaren Materials, die auf der Schicht Silber abgeschieden ist, aufweist.

## Revendications

1. Un procédé pour lier une ferrite à un corps métallique, comprenant les étapes de :
a) métallisation de la ferrite en déposant au moins une couche de métal sur au moins une partie d'une surface de la ferrite ;
b) soudure de la ferrite métallisée au corps métallique; **caractérisée en ce que** avant ladite phase b) de soudure, il comprend les étapes suivantes :
a.1) dépôt sur ledit corps métallique d'une première couche de nickel et d'une deuxième couche d'argent ; et
a.2) dépôt d'une couche de matériau soudable sur ladite couche d'argent.

2. Le procédé de liaison selon la revendication 1, **caractérisé en ce que** ladite couche de métal est constituée par du cuivre.

3. Le procédé de liaison selon la revendication 1, **caractérisé en ce que** ladite couche de métal comprend au moins deux couches différentes de matériau métallique.

4. Le procédé de liaison selon la revendication 3, **caractérisé en ce que** lesdites deux couches différentes comprennent une première couche de palladium et une deuxième couche de cuivre, la couche de palladium adhérant directement à la surface de la ferrite et la couche de cuivre adhérant à la couche de palladium.

5. Le procédé de liaison selon l'une ou plusieurs des revendications précédentes, **caractérisé en ce que** ladite étape a) est réalisée au moyen d'une métallisation électrolytique.

6. Le procédé de liaison selon l'une ou plusieurs des revendications 1 à 4, **caractérisé en ce que** ladite étape a) est réalisée au moyen d'une évaporation sous vide poussée, ou d'une métallisation sous vide ou d'un dépôt assisté au plasma ou d'un dépôt au canon d'électrons.

7. Le procédé de liaison selon la revendication 1, **caractérisé en ce que** la couche de nickel présente une épaisseur de 1 à 3 µm et la couche d'argent d'une épaisseur 5 et 15 µm.

8. Le procédé de liaison selon la revendication 1 ou 7, **caractérisé en ce que** lesdites couches d'argent et de nickel sont déposées sur le corps métallique par galvanisation.

9. Le procédé de liaison selon l'une ou plusieurs des revendications précédentes, **caractérisé en ce que** ladite étape b) est réalisée par brasage.

10. Le procédé de liaison selon la revendication 9, **caractérisé en ce que** ladite étape b) est réalisée par brasage à l'air chaud.

11. Le procédé de liaison selon la revendication 9, **caractérisé en ce que** ladite étape b) est réalisée par brasage à induction.

12. Le procédé de liaison selon la revendication 9, **caractérisé en ce que** ladite étape b) est réalisée par brasage au four.

13. Le procédé de liaison selon la revendication 9, **caractérisé en ce que** ladite étape b) est réalisée par brasage au laser.

14. Un dispositif mécanique comprenant au moins un corps métallique, une ferrite, et une couche de métal qui adhèrent au moins à une partie de surface de la ferrite, **caractérisé en ce qu'**il comprend une couche de nickel déposée sur au moins une partie de la surface du corps métallique, une couche d'argent déposée sur la couche de nickel et en contact avec ladite couche de métal, une couche de matériau soudable déposée sur la couche d'argent.
